Europäisches Patentamt

European Patent Office

Office européen des brevets

(11) Veröffentlichungsnummer : **0 163 876**
**B1**

(12) **EUROPÄISCHE PATENTSCHRIFT**

(45) Veröffentlichungstag der Patentschrift :
30.09.87

(21) Anmeldenummer : 85104692.0

(22) Anmeldetag : 10.01.83

(60) Veröffentlichungsnummer der früheren Anmeldung
nach Art. 76 EPÜ : 0084517

(51) Int. Cl.⁴ : **C 23 C 18/14, C 23 C 18/38,**
**C 23 C 18/42, C 23 C 18/46,**
**H 01 L 21/208, G 03 C 1/00**

(54) Verfahren zum Abscheiden von Metallen auf Halbleiterpulvern.

(30) Priorität : 15.01.82 CH 241/82

(43) Veröffentlichungstag der Anmeldung :
11.12.85 Patentblatt 85/50

(45) Bekanntmachung des Hinweises auf die Patenterteilung : 30.09.87 Patentblatt 87/40

(84) Benannte Vertragsstaaten :
BE CH DE FR GB IT LI

(56) Entgegenhaltungen :
EP-A- 0 018 499
US-A- 3 907 566
IBM TECHNICAL DISCLOSURE BULLETIN, vol. 23, no. 3, August 1980, Seite 1262
JOURNAL OF THE AMERICAN CHEMICAL SOCIETY, Vol. 100, No. 13, 21. Juni 1978 BERNHARD KRAEUTLER "Herterogeneous Photocatalytic Preparation of supported Catalysts.Photodeposition of Platinum on TIO2 Powder and other Substrates "Seiten 4317-4318.
THE JOURNAL OF PHYSICAL CHEMISTRY, Vol.83,No.17,23.August 1979 HARALD REICHE "Heterogeneous Photocatalytic and Photosynthetic Deposition of Copper on TIO2 and WO3 Powders" Seiten 2248-2251.
BULLETIN OF THE CHEMICAL SOCIETY OF JAPAN, Vol. 51, No.11, 1978 HIRISHI HADA "The Photoreduction of the Silver Ion in a Zinc Oxide Suspension"Seiten 3154-3160.

(73) Patentinhaber : CIBA-GEIGY AG
Klybeckstrasse 141
CH-4002 Basel (CH)

(72) Erfinder : Meier, Kurt, Dr.
Ulmenstrasse 11
CH-4123 Allschwil (CH)
Erfinder : Bühler, Niklaus, Dr.
Route du Pâquier 8
CH-1723 Marly (CH)
Erfinder : Reber, Jean-François, Dr.
Gstaltenrainweg 69
CH-4125 Riehen (CH)

**0 163 876**

**Beschreibung**

Die Erfindung betrifft ein neues Verfahren zum Abscheiden von Metallen auf Halbleiterpulvern.

Aus der Literatur ist bekannt, dass man auf Halbleiterpulvern, wie —ZnO-, $TiO_2$- und $WO_3$-Pulvern, oder $TiO_2$-Einkristallen durch Photoredoxreaktion Metalle abscheiden kann. Als Metallverbindungen wurden einfache Metallsalze, wie z. B. Hexachlorplatinsäure, Silberperchlorat, Kupfersulfat und Palladiumchlorid, eingesetzt. Nach diesen vorbekannten Verfahren muss die Reaktion unter Ausschluss von Sauerstoff durchgeführt werden. Während der Umsetzung allfällig gebildetes $CO_2$ wird zweckmässig durch Einblasen von Stickstoff entfernt [vgl. z. B. JACS, 100 : 13, 4 317 (1978), J. Phys. Chem. 83, 2 248 (1979), J. Phys. Chem., 85, 268 (1981) und Bull. Chem. Soc. Japan, 51, 3 154 (1978)].

Es ist weiter bekannt, dass sich gewisse Halbleiterpulver, wie ZnO, ZnS, $Bi_2S_3$, $FeTiO_3$ oder $Fe_2TiO_4$, beim Belichten in rein wässrigem Medium langsam zersetzen (Solar Energy 20, 443 (1978).

Die Erfindung betrifft ein neues Verfahren zum Abscheiden von Kupfer, Blei, Quecksilber, Zinn, Gold, Silber, Palladium, Osmium und/oder Cadmium aus Kupfer-, Blei-, Quecksilber-, Zinn-, Gold-, Silber-, Palladium-, Osmium oder Cadmiumsalzen oder -komplexen auf halbleiterpulvern durch Photoredoxreaktion in Gegenwart von Alkanolen mit bis zu 6 C-Atomen, Gemischen aus Wasser und Alkanolen mit bis zu 6 C-Atomen oder anderen organischen Lösungsmitteln, Gemischen aus Wasser und Alkalimetall-, Erdalkalimetall- oder Ammoniumsulfiten oder -sulfiden, oder Acetatpuffer enthaltendem Wasser als oxidierbarem System, dadurch gekennzeichnet, dass man ZnS oder $Bi_2S_3$ als Halbleiterpulver verwendet und dass man die Halbleiterpulver-Suspension in Gegenwart von Sauerstoff und gegebenenfalls $CO_2$ bestrahlt.

Das erfindungsgemässe Verfahren zeichnet sich einerseits durch seine Einfachheit und Wirtschaftlichkeit aus, da dabei auf besondere Massnahmen und Apparaturen zum Ausschliessen von Sauerstoff und gegebenenfalls von $Co_2$, die sehr aufwendig sein können, verzichtet und in offenen Systemen, z. B. in Klärbecken und dergleichen, gearbeitet werden kann. Das erfindungsgemässe Verfahren gestattet zudem eine sehr weitgehende Extraktion der genannten Metalle selbst aus stark verdünnten Lösungen oder Suspensionen, im allgemeinen bis unterhalb 0,1 ppm und bei Silber sogar bis auf 50 ppb. Es eignet sich auch zur Extraktion von Metallkomplexen, wie $Ag(S_2O_3)_2{}^{3-}$, die nach konventionellen gravimetrischen Methoden nicht ausgefällt werden können. Auch ist es überraschend, dass sich erfindungsgemäss in Gegenwart von Sauerstoff Metalle mit einem negativeren Reduktionspotential als dasjenige von Sauerstoff, wie Silber, Palladium, Osmium und Cadmium, abscheiden lassen.

Als oxidierbare Systeme werden im erfindungsgemässen Verfahren Alkanole mit bis zu 6 C-Atomen, wie Methanol, Aethanol, Propanol, Isopropanol, Butanole und Hexanole, Gemische von Wasser und Alkanolen der gennanten Art oder anderen organischen Lösungsmitteln, wie aliphatischen oder cyclischen Aethern, z. B. Diäthyläther, Di-isopropyläther, Tetrahydrofuran, Dioxan oder Cellosolve, Gemische aus Wasser und Alkalimetall-, Erdalkalimetall- oder Ammonium-sulfiten oder -sulfiden, oder Acetatpuffer enthaltendes Wasser verwendet. Geeignete Alkalimetalle und Erdalkalimetalle sind z. B. Na, K, Li, Mg, Ca und Ba. Bevorzugt sind Ammonium- und Alkalimetall-sulfite oder -sulfide im Gemisch mit Wasser, besonders Gemische aus Wasser und Natrium- oder Ammoniumsulfit.

Besonders bevorzugt wird das erfindungsgemässe Verfahren in Wasser oder in Acetatpuffer oder Natriumsulfit enthaltendem Wasser durchgeführt. Die Reaktionstemperaturen liegen im allgemeinen zwischen 0 und 40 °C, besonders bevorzugt bei Raumtemperatur.

Bei dem erfindungsgemässen Verfahren werden als Halbleiterpulver ZnS oder $Bi_2S_3$ eingesetzt. Bevorzugt verwendet man ZnS-Pulver.

Die spezifische Oberfläche der Halbleiterpulver kann innerhalb breiter Grenzen variieren und hängt im wesentlichen von der Art des Halbleiters ab. Die im erfindungsgemässen Verfahren einzusetzenden Halbleiterpulver weisen zweckmässig eine spezifische Oberfläche von 0,1 bis 50 $m^2/g$, bevorzugt zwischen 1 und 10 $m^2/g$ auf.

Im allgemeinen können Halbleiterpulver sogenannter technischer Qualität eingesetzt werden.

Die Halbleiterpulver können in an sich beliebiger Menge eingesetzt werden. Ein Vorteil des erfindungsgemässen Verfahrens besteht darin, dass im allgemeinen geringe Mengen an Halbleiterpulver für eine erschöpfende Extraktion der Metalle genügen. Zweckmässig werden die Halbleiterpulver in einer Menge von 0,05 bis Gew.%, vorzugsweise 0,1 bis 2,0 Gew.%, bezogen auf das Reaktionsvolumen, verwendet.

Die abzuscheidenden Metalle können als einfache oder Komplexe Salze vorliegen, z. B. als Ammonium- und Alkalimetallhexa- oder -tetrahalogenmetallate, Halogenide, Nitrate, Acetate, Cyanide, Sulfate oder Thiosulfate. Geeignete Metallverbindungen bzw. -salze sind beispielsweise Silberacetat, Silbernitrat, Silberthiosulfat, Palladiumchlorid oder -jodid, Palladiumacetat, -cyanid und -nitrat, Lithiumtetrachloropalladat (II), Gold (III) chlorid, -bromid und -jodid, Ammonium-hexachloroosmat (IV), Osmiumtetroxid $(OsO_4)$, Cadmiumacetat und Cadmiumchlorid. Bevorzugt handelt es sich dabei um Gold-, Silber-, Palladium-, Osmium- und/oder Cadmiumsalze oder -komplexe, vor allem um Palladium- oder Cadmium- und insbesondere um Silbersalze bzw. -komplexe.

Als Lichtquelle kann im erfindungsgemässen Verfahren an sich beliebiges Licht eingesetzt werden, dessen Wellenlänge je nach Halbleiter zwischen ca. 200 und 650 nm liegt. Geeignete Lichtquellen sind

2

**0 163 876**

Sonnenlicht oder gegebenenfalls metallatomdotierte Quecksilberhochdrucklampen, Xenondampflampen, Quecksilber-Xenonlampen, Quecksilberniederdruck- und -mitteldrucklampen, Halogenlampen, Wolframlampen und $D_2$-Lampen.

Bevorzugt erfolgt die Bestrahlung mit Sonnenlicht oder einer Quecksilberhochdrucklampe.

Das erfindungsgemässe Verfahren eignet sich zur Rückgewinnung von Kupfer, Blei, Quecksilber, Zinn, Gold, Silber, Palladium, Osmium und Cadmium aus den verschiedenartigsten Abwässern und Lösungen, wie sie in der Industrie oder bei chemischen Umsetzungen anfallen, z. B. photographische Entwickler-, Bleich- und Fixierlösungen, Hydrierlösungen und dergl., oder auch zur Metallgewinnung, wie Gold und Silber, aus wässrigen Systemen.

Nach dem erfindungsgemässen Verfahren können bis zu 10 Gew.% Metall auf den Halbleiterpulvern abgeschieden werden. Das abgeschiedene Metall kann leicht von den Halbleiterpulvern getrennt werden. z. B. durch Behandeln mit Oxidationsmitteln, wie $HNO_3$, $H_2SO_4$ und $Na_2O_2$, und die Halbleiterpulver können wieder verwendet werden.

## Beispiel 1

1 g ZnS (spezifische Oberfläche 38,5 m²/g) wird in einer Lösung von 20 mg Cadmiumacetat in 100 ml einer 10 %igen wässrigen Natriumsulfitlösung aufgeschlämmt und 2 Stunden in einem Photoreaktor, der mit einer 125 W Quecksilberhochdrucklampe, einem Magnetrührer und einem wassergekühlten Tauchfinger ausgerüstet ist, bei Raumtemperatur bestrahlt. Dabei färbt sich die Suspension grau. Die Suspension wird abfiltriert, mit Wasser gewaschen und 24 Stunden bei 80 °C/13 000 Pa getrocknet. Man erhält 1 g eines grauen Pulvers ; Cadmiumgehalt 1,2 Gew.%.

## Beispiel 2

Beispiel 1 wird wiederholt, jedoch unter Verwendung von 20 mg Cadmiumacetat in 100 ml Wasser und ohne Zugabe von Natriumsulfit. Man erhält 1 g eines grauen Pulvers ; Cadmiumgehalt 0,78 Gew.%. Cadmiumgehalt des Filtrats = 0,8 ppm (Blindwert vor der Belichtung = 65 ppm).

## Beispiele 3-6

1 g ZnS (spezifische Oberfläche 38,5 m²/g) wird in einer Lösung von 20 mg Metallsalz gemäss untenstehender Tabelle und 1 g Natriumsulfit in 100 ml Wasser aufgeschlämmt und eine Stunde mit einem Photoreaktor, der mit einer 125 W Quecksilberhochdrucklampe, einem Magnetrührer und einem wassergekühlten Tauchfinger aus Pyrexglas ausgerüstet ist, bei Raumtemperatur bestrahlt. Die Suspensionen werden abfiltriert und 24 Stunden bei 80 °C/13 000 Pa getrocknet. Die Metallgehalte der ZnS-Pulver sowie jene der Filtrate sind in der Tabelle aufgeführt.

### Tabelle

| Beispiel Nr. | Metallsalz | Gew.-% Metall auf ZnS | ppm Metall im Filtrat |
|---|---|---|---|
| 3 | $Pb(CH_3COO)_2 \cdot 3H_2O$ | 1,1 | 5 |
| 4 | $CuSO_4 \cdot 5H_2O$ | 0,59 | kleiner als 5 |
| 5 | $Hg(CH_3COO)_2$ | 1,0 | 6,5 |
| 6 | $SnCl_2 \cdot 2H_2O$ | 1,3 | 8,5 |

**Patentansprüche**

1. Verfahren zum Abscheiden von Kupfer, Blei, Quecksilber, Zinn, Gold, Silber, Palladium, Osmium und/oder Cadmium aus Kupfer-, Blei-, Quecksilber-, Zinn-, Gold-, Silber-, Palladium-, Osmium- oder Cadmiumsalzen oder -komplexen auf Halbleiterpulvern durch Photoredoxreaktion in Gegenwart von Alkanolen mit bis zu 6 C-Atomen, Gemischen aus Wasser und Alkanolen mit bis zu 6 C-Atomen oder anderen organischen Lösungsmitteln, Gemischen aus Wasser und Alkalimetall-, Erdalkalimetall- oder Ammoniumsulfiten oder -sulfiden, oder Acetatpuffer enthaltendem Wasser als oxidierbarem System, dadurch gekennzeichnet, dass man ZnS oder $Bi_2S_3$ als Halbleiterpulver verwendet und dass man die Halbleiterpulver-Suspension in Gegenwart von Sauerstoff und gegebenenfalls $CO_2$ bestrahlt.

2. Verfahren nach Anspruch 1 zum Abscheiden von Gold, Silber, Palladium, Osmium und/oder Cadmium auf Halbleiterpulvern, dadurch gekennzeichnet, dass man die Bestrahlung in Gegenwart eines Gold-, Silber-, Palladium-, Osmium- und/oder Cadmiumsalzes oder -komplexes durchführt.

3. Verfahren nach Anspruch 1, dadurch gekennzeichnet, dass man die Reaktion in Acetatpuffer oder Natriumsulfit enthaltendem Wasser durchführt.

4. Verfahren nach Anspruch 1, dadurch gekennzeichnet, dass man Zinksulfidpulver verwendet.

5. Verfahren nach Anspruch 1, dadurch gekennzeichnet, dass man das Halbleiterpulver in einer Menge von 0,05 bis 5 Gew.%, bezogen auf das Reaktionsvolumen, verwendet.

6. Verfahren nach Anspruch 1, dadurch gekennzeichnet, dass das Reaktionsmedium Palladium, Cadmium oder Silber in Salz- oder Komplexform enthält.

7. Verfahren nach Anspruch 1, dadurch gekennzeichnet, dass die Bestrahlung durch Sonnenlicht oder mit einer Quecksilberhochdrucklampe erfolgt.

## Claims

1. Process for the deposition of copper, lead, mercury, tin, gold, silver, palladium, osmium and/or cadmium from salts or complexes of copper, lead, mercury, tin, gold, silver, palladium, osmium or cadmium on semiconductor powders by photo-redox reaction in the presence of alkanols of up to 6 carbon atoms, mixtures of water and alkanols of up to 6 carbon atoms or other organic solvents, mixtures of water and alkali metal sulfites or sulfides, alkaline earth metal sulfites or sulfides, or ammonium sulfites or sulfides, or water containing acetate buffer as oxidizable system, characterized in that ZnS or $Bi_2S_3$ is used as semiconductor powder and that the semiconductor powder suspension is irradiated in the presence of oxygen and optionally $CO_2$.

2. Process according to Claim 1 for the deposition of gold, silver, palladium, osmium and/or cadmium on semiconductor powders, characterized in that the irradiation is carried out in the presence of a salt or complex of gold, silver, palladium, osmium and/or cadmium.

3. Process according to Claim 1, wherein the reaction is carried out in water containing acetate buffer or sodium sulfite.

4. Process according to Claim 1, characterized in that zinc sulfide powder is used.

5. Process according to Claim 1, characterized in that the semiconductor powder is used in an amount of 0.05 to 5 % by weight, based on the reaction volume.

6. Process according to Claim 1, characterized in that the reaction medium contains palladium, cadmium or silver in salt or complex form.

7. Process according to Claim 1, characterized in that irradiation is carried out with sunlight or with a mercury high pressure lamp.

## Revendications

1. Procédé pour déposer du cuivre, du plomb, du mercure, de l'étain, de l'or, de l'argent, du palladium, de l'osmium et/ou du cadmium, sur des poudres de semiconducteurs, à partir de sels ou de complexes de cuivre, de plomb, de mercure, d'étain, d'or, d'argent, de palladium, d'osmium ou de cadmium, par une réaction photorédox en présence d'alcanols contenant au plus 6 atomes de carbone, de mélanges d'eau et d'alcanols contenant au plus 6 atomes de carbone ou d'autres solvants organiques, de mélanges d'eau et de sulfites ou de sulfures de métaux alcalins, de métaux alcalino-terreux ou d'ammonium, ou d'eau contenant un tampon d'acétate, comme système oxydable, procédé caractérisé en ce qu'on utilise une poudre de ZnS ou de $Bi_2S_3$ comme poudre de semi-conducteur et en ce qu'on irradie la suspension de la poudre de semi-conducteur en présence d'oxygène et, éventuellement, de $CO_2$.

2. Procédé selon la revendication 1 pour déposer de l'or, de l'argent, du palladium, de l'osmium et/ou du cadmium sur des poudres semi-conductrices, procédé caractérisé en ce qu'on effectue l'irradiation en présence d'un sel ou d'un complexe d'or, d'argent, de palladium, d'osmium et/ou de cadmium.

3. Procédé selon la revendication 1 caractérisé en ce qu'on effectue la réaction dans de l'eau contenant un tampon d'acétate ou contenant du sulfite de sodium.

4. Procédé selon la revendication 1 caractérisé en ce qu'on utilise une poudre de sulfure de zinc.

5. Procédé selon la revendication 1 caractérisé en ce qu'on utilise la poudre de semi-conducteur en une quantité de 0,05 à 5 % en poids par rapport au volume réactionnel.

6. Procédé selon la revendication 1 caractérisé en ce que le milieu réactionnel contient du palladium, du cadmium ou de l'argent sous la forme d'un sel ou d'un complexe.

7. Procédé selon la revendication 1 caractérisé en ce que l'irradiation est effectuée au moyen de la lumière solaire ou au moyen d'une lampe à mercure haute pression.